# EUROPEAN PATENT APPLICATION

(11) **EP 1 837 543 A2**
(43) Date of publication of application: **26.09.2007**
(21) Application number: 07104402.8
(22) Date of filing: 19.03.2007
(51) Int. Cl.: F16D 13/52, F16D 43/10

(54) **Clutch Mechanism and Motor Vehicle Using the Clutch Mechanism**

(30) Priority: 20.03.2006 JP 2006076888
(71) Applicant: Shigematsu Co., Ehime 791-2113 (JP)
(72) Inventor: Shigematsu, Takeshi, Iyo-gun Ehime 7912113 (JP)
(74) Representative: Murgitroyd, Ian George

(57) **Abstract**

A clutch mechanism which is capable of reducing a force required for operating a clutch lever, and ensuring tightness of pressure contact that can prevent slide between friction plates and clutch plates, and realizing space-saving and reduction of mounting-related costs, and a motor vehicle using the clutch mechanism. The clutch mechanism uses a retainer which includes a first annular portion (20) and a second annular portion (30) that are concentrically located with a connecting portion therebetween, and which is provided with a plurality of centrifugal load-applying means circumferentially disposed on said first annular portion, and connection holes (31) formed in areas of the second annular portion (30) that correspond to areas between the centrifugal load-applying means in the first annular portion (20).

## Description

### Technical Field

The present invention relates to a clutch mechanism which is used in a motor vehicle such as a two-wheeled motor vehicle, a four-wheeled motor vehicle or the like, and a motor vehicle using the clutch mechanism.

### Background Art

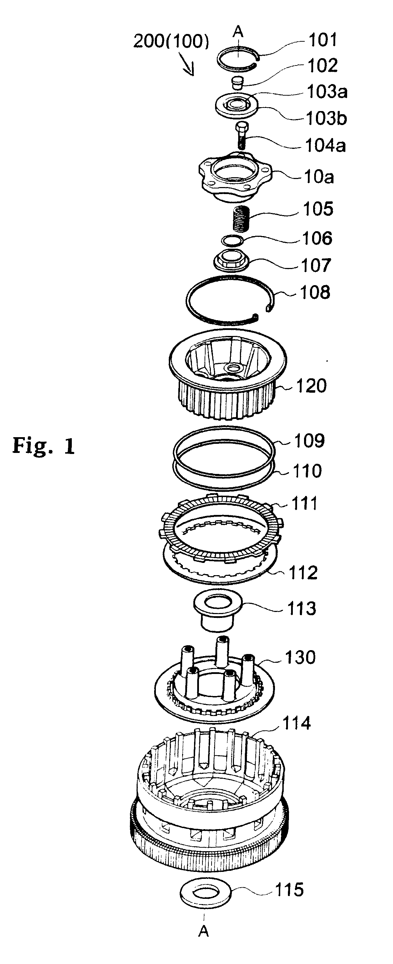

Fig.1 is an exploded perspective view showing a general structure of a hydraulic clutch used in a two-wheeled motor vehicle.

A clutch mechanism 200 is a hydraulic clutch mechanism which plays roles to transfer a rotational driving force from a rotational driving force input system (hereinafter referred to as "input system") to a rotational driving force output system (hereinafter referred to as "output system") and to discontinue the transfer.

The clutch mechanism 200 has a retaining ring 101, a contact button, a bearing 103a, a release plate 103b, bolts 104a, a retainer 10a, coil springs 105, retaining ring 106, a nut 107, a retaining clip 108, an inner hub 120, a seat spring 109, a spring 110, friction plates 111, clutch plates 112, a collar 113, a pressure plate 130, a clutch outer case 114, and a washer 115.

The bearing 103a is attached to the release plate 103b, and the release plate 103b is fitted in a concave portion of the retainer 10a, and the bearing 103a is held in place (fastened) by the retaining ring 101. The contact button 102 is pushed into bearing 103a, and the contact button 102 is pressed by hydraulic pressure in response to operation of a clutch lever.

The plurality of friction plates 111 meshed with the clutch outer case 114 connected to the input system via a gear and the plurality of clutch plates 112 meshed with the inner hub 120 connected to the output system are alternately placed in an annular space between a cylindrical portion of the inner hub 120 and a cylindrical portion of the clutch outer case 114. In this connection, at each end of the alternately placed friction plates 111 and clutch plates 112, a friction plate 111 is placed. Between the friction plate 111 placed proximate to the retainer 10a and a flange of the inner hub 120, the seat spring 109 and the spring 110 are disposed.

The retainer 10a and pressure plate 130 are fastened with the bolts 104a inserted through the through holes of the inner hub 120, and the coil springs 105 are compressedly disposed between the retainer 10a and inner hub 120.

In the clutch mechanism 200 having such a structure, engagement and disengagement between the input system and the output system are effected by bringing the friction plates 111 and the clutch plates 120 into pressure contact with each other and by releasing the friction plates 111 and the clutch plates 120 from the pressure contact, respectively.

Specifically, in a condition where the clutch lever is not grasped, the friction plates 111 and the clutch plates 112 which are disposed between the pressure plate 130 connected to the retainer 10a and the inner hub 120 are brought into pressure contact with each other by an elastic force of the coil springs 105 compressedly disposed between the retainer 10a and the inner hub 120.

On the other hand, when the clutch lever is grasped, the contact button 102 is pressed by hydraulic pressure, and the contact button 102 presses the retainer 10a together with the bearing 103a. Consequently, the pressure plate 130 connected to the retainer 10a is moved in a direction opposite to the retainer 10a to release the friction plates 111 and clutch plates 112 which are disposed between the pressure plate 130 and the inner hub 120 from the press contact.

Now, description will be given with respect to a spring load of the elastic members in the clutch mechanism 200.

When the spring load of the elastic members is determined, from a maximum torque value of a two-wheeled motor vehicle, a necessary clutch load which is required for preventing slide from occurring between the friction plates and the clutch plates is found. Then, the spring load of the elastic members is so determined that the load with which the pressure plate presses the friction plates is greater than the necessary clutch load.

As described above, the spring load of the elastic members is generally determined on the basis of the maximum torque value and is thus set to be constant irrespective of an engine speed. It is thereby possible to prevent slide between the friction plates and the clutch plates over a whole range of the engine speed.

In this manner, the spring load of the elastic members is determined on the basis of the maximum torque value. Accordingly, the spring load is inevitably large in a case of a motor vehicle with a high torque engine.

As described above, in a case of a two-wheeled motor vehicle, a pressure plate which directly presses friction plates is operated by a clutch lever manually handled by a driver. In other words, by driver's grasping of the clutch lever, the pressure plate is moved against a spring load of elastic members, and the friction plates are released from the pressing applied thereto by the pressure plate. The pressure contact between clutch plates and the friction plates is thereby removed to effect discontinuation of transfer of a rotational driving force inputted from an input system to an output system, i.e., so-called "disengagement of clutch". Thus, when "disengagement of clutch" is effected, the driver is required to operate the clutch in such a manner that the driver grasps the clutch lever with a force capable of overcoming the spring load of the elastic members.

Accordingly, in driving of a two-wheeled motor vehicle with a high torque engine, a driver is required to apply a relatively large force to the clutch lever to effect manual operation thereof. This is likely to put a heavy burden on the driver.

Actually, in driving of a two-wheeled motor vehicle with a high torque engine for a long time, or in driving along a street with a high traffic density which requires repeated gear shiftings, driver's grasping power is likely to lower. To tackle such situations, it is important for a driver to enhance physical strengths such as grasping power and the like and to develop high driving skill which enables smooth gear shifting. Under these circumstances, those who can enjoy driving of a large two-wheeled motor vehicle have been a limited number of people. Accordingly, to enable a number of people to enjoy driving of a large two-wheeled motor vehicle, reduction of driver's burden in manual operation of the clutch lever is important.

As a method for reducing a force required for manually operating a clutch lever, there has been a method in which amount of movement of a pressure plate is reduced as compared with that in a conventional clutch mechanism. By this method, however, it has not been easy to realize accuracy in removing a pressing force applied by the pressure plate to friction plates to ensure a condition where the friction plates and clutch plates are surely released from pressure contact therebetween.

As a technique to solve these problems, International Publication No.WO2005/116474 discloses a clutch mechanism which reduces a force with which a driver grasps a clutch lever and which ensures tightness of pressure contact between friction plates and clutch plates that is capable of preventing slide between the friction plates and the clutch plates by utilizing centrifugal forces of centrifugal mechanisms.

Use of the clutch mechanism disclosed in International Publication No.WO2005/116474 satisfies both of the demand for reduction of a force required for operating a clutch lever and the demand for ensuring tightness of pressure contact between friction plates and clutch plates which is capable of preventing slide between the friction plates and the clutch plates.

### Disclosure of Invention

### Problems to be Solved by the Invention

For example, when a clutch mechanism of a two-wheeled motor vehicle is replaced with the clutch mechanism disclosed in International Publication No.WO2005/116474, a covering of a mounting space therefor or the like is required to be altered depending upon the type of motor vehicle. This entails the cost of alteration of the covering or the like as well as the cost of mounting the clutch mechanism. Accordingly, in replacement of a clutch mechanism of a two-wheeled motor vehicle, it is important to reduce such mounting-related costs.

Further, in a case of a motor vehicle, in particular, a two-wheeled motor vehicle, a mounting space of a clutch mechanism or the like is likely to be limited due to its structure. Accordingly, when a clutch mechanism is mounted on a two-wheeled motor vehicle, it is necessary to mount the clutch mechanism in such a manner that the clutch mechanism is contained in a limited space.

In other words, with respect to a clutch mechanism of a motor vehicle, in particular, a two-wheeled motor vehicle, it is important to realize space-saving.

As described above, for example, in order to enable a number of people to enjoy a two-wheeled motor vehicle with a high torque engine, it is important to improve space-saving and to reduce mounting-related costs while maintaining the effect of the clutch mechanism disclosed in International Publication No.WO2005/116474.

The present invention has been made in view of the above-described problems. It is, therefore, an object of the present invention to provide a clutch mechanism which reduces a force required for operating a clutch lever and ensures tightness of pressure contact between friction plates and clutch plates that is capable of preventing slide between the friction plates and the clutch plates, and further, which is capable of improving space-saving of the clutch mechanism and reducing mounting-related costs, and a motor vehicle using the clutch mechanism.

### Means to Solve the Problems

The present invention provides a clutch mechanism (100) comprising annular inputting members (111) connected to a rotational driving force input system and annular outputting members (112) connected to a rotational driving force output system, said annular inputting members (111) and said annular outputting members (112) being alternately placed, and said annular inputting members (111) and said annular outputting members (112) being brought into pressure contact with each other to transfer a driving force from said rotational driving force input system to said rotational driving force output system, and said annular inputting members (111) and said annular outputting members (112) being released from the pressure contact to discontinue the transfer of the driving force; said clutch mechanism (100) further comprising:
a first pressing member (10) including a first annular portion (20) and a second annular portion (30) which are concentrically located with a connecting portion (40) therebetween, and being provided with a plurality of centrifugal load-applying means circumferentially disposed on said first annular portion, and connection holes (31) formed in areas of said second annular portion which correspond to areas between said centrifugal load-applying means in the first annular portion,
an outputting member (120) on an outer side surface of which said annular outputting members (112) are so mounted as to engage with the outer side surface movably in the direction of the rotational axis of said clutch mechanism (100), said outputting member (120) being provided with an accommodation portion (127) for accommodating said first pressing member (10) with said first annular portion (20) facing the bottom of the accommodation portion and said second annular portion (30) located near an opening of the accommodation portion, and through holes (124) formed in the bottom of the accommodation portion (127) at positions corresponding to those of the connection holes (31) of said second annular portion (30),
a second pressing member (130) provided with supporting portions (131) which are inserted through said holes (124) of said outputting member (120) and connected to said connection holes (31) to support said first pressing member (10), and
elastic load-applying means compressedly placed between said second annular portion (30) and the bottom of said outputting member (120);
said centrifugal load-applying means each including a plurality of supports arranged in a ring in said first annular portion(20), and swing members each having swingable L-shaped arms which extend through said first annular portion (20) and which are supported by said support and which are provided with a mass body at their one ends on the side nearer to said second annular portion (30) and operative portions at opposite ends thereof,
said outputting member (120) being provided with ribs in areas between said holes (124), and said swing members each having two L-shaped arms and one mass body, and said two L-shaped arms being disposed in such a manner that one of said rims is located therebetween,
said centrifugal load-applying means being means for generating a pressing load which presses the bottom of said outputting member (120) in response to rotation of said first pressing member (10),
said centrifugal load-applying means and said elastic load-applying means cooperatively generating a pressing force to bring said annular inputting members and said annular outputting members which are alternately placed into pressure contact.

The present invention also provides a clutch mechanism (100) comprising annular inputting members (111) connected to an engine crankshaft and annular outputting members (112) connected to a transmission input shaft, said annular inputting members (111) and said annular outputting members (112) being placed around an outer side surface of an outputting member (120) accommodating a first pressing member (10) alternately and movably in the direction of the rotational axis of said clutch mechanism (100), and said annular inputting members (111) and said annular outputting members (112) being brought into pressure contact with each other by means of a second pressing member (130) provided with supporting portions (131) which are inserted through said holes (124) of said outputting member (120) and support said first pressing member (10) to transfer a driving force from said rotational driving force input system to said rotational driving force output system, and said annular inputting members (111) and said annular outputting members (112) being released from the pressure contact to discontinue the transfer of the driving force;
said first pressing member (10) including a first annular portion (20) and a second annular portion (30) which are concentrically located with a connecting portion (40) therebetween, and being provided with a plurality of centrifugal load-applying means circumferentially disposed on said first annular portion, and connection holes (31) formed in areas of said second annular portion which correspond to areas between said centrifugal load-applying means in the first annular portion and connected to said supporting portions (131), and being accommodated in an accommodation portion of said outputting member (120) with said first annular portion (20) facing the bottom of said outputting member (120) and said second annular portion (30) located near an opening of said outputting member (120);
said clutch mechanism further comprising elastic load-applying means compressedly placed between said second annular portion (30) and the bottom of the accommodation portion of said outputting member (120);
said centrifugal load-applying means including a plurality of supports arranged in a ring in said first annular portion(20), and swing members each having swingable L-shaped arms which extend through said first annular portion (20) and which are supported by said support and which are provided with a mass body at their one ends on the side nearer to said second annular portion (30) and operative portions at opposite ends thereof;
said outputting member (120) being provided with ribs in areas between said holes (124), and said swing members each having two L-shaped arms and one mass body, and said two L-shaped arms being disposed in such a manner that one of said rims is located therebetween;
said centrifugal load-applying means being means for generating a pressing load which presses the bottom of said outputting member (120) in response to rotation of said first pressing member (10);
said centrifugal load-applying means and said elastic load-applying means cooperatively generating a pressing load to bring said annular inputting members and said annular outputting members which are alternately placed into pressure contact.

A centrifugal load transfer member, for example, a base plate (50) may be interposed between the operative portions (24a, 24b) and the bottom of the inner hub (120) to enable the operative portions (24a, 24b) to bias the inner hub (120) via the centrifugal load transfer member such as a base plate (50).

The centrifugal load transfer member such as a base plate (50) may be provided with an annular portion (51) and a plurality of plate portions (52a, 52b) extending from the outer circumference of the annular portion (51), and the plate portions (52a, 52b) are placed at positions corresponding to those of the operative portions (24a, 24b). The elastic load-applying means may be coil springs (105), and the coil springs (105) are disposed surrounding the protrusions (supporting portions) (131). The retainer (10) is preferably placed in such a manner that a surface of the second annular portion (30) which is opposite the first annular portion (20) is located inside the opening of the accommodation portion (127) of the inner hub (120).
The annular inputting members (111) and said annular outputting members (112) are optionally disposed between said second pressing member (130) and said outputting member (120),

The clutch mechanism may be used advantageously in a motor vehicle such as a two-wheeled motor vehicle, a four-wheeled motor vehicle or the like.

### Effect of the Invention

According to the clutch mechanism and the motor vehicle using the clutch mechanism of the present invention, such effects are attained that a force required for operating a clutch lever is reduced, and tightness of pressure contact between friction plates and clutch plates which is capable of preventing slide between the friction plates and the clutch plates is ensured, and further, space-saving is improved, and mounting-related costs are reduced.

### Brief Description of the Drawings

In the following, embodiments of the present invention will be described in detail with reference to the drawings, in which:-
Fig.1 is an exploded perspective view showing a general structure of a hydraulic clutch used in a two-wheeled motor vehicle;
Fig.2 is a perspective view showing a retainer 10;
Fig.3 is a plan view showing the retainer 10;
Fig. 4 is a bottom view showing the retainer 10;
Fig.5 is a side view showing the retainer 10;
Fig.6 is a side view [Fig.6(a)] showing the retainer 10 and a sectional view [Fig.6(b)] showing the retainer 10 and taken along the line B-B shown in Fig 4;
Fig.7 is a partial cutaway perspective view showing an inner hub 120 as a constituent of the clutch mechanism 100;
Fig.8 is a perspective view showing the inner hub 120 as a constituent of the clutch mechanism 100;
Fig.9 is a plan view [Fig.9(a)] showing spacers 60 bolts 104, and the inner hub 120 and a plan view [Fig.9(b)] showing a base plate 50;
Fig.10 is a perspective view showing a pressure plate 130;
Fig.11 is a partially cutaway perspective view showing the pressure plate 130 and the inner hub 120 attached thereto;
Fig.12 is a side view showing the pressure plate 130 and the inner hub 120 attached thereto; and
Fig.13 is a partially cutaway perspective view showing the pressure plate 130, and the inner hub 120 and the retainer 10 which are attached to the pressure plate.

### Detailed Description of the Drawings

### First Embodiment

A clutch mechanism 100 according to a first embodiment of the present invention has such a structure that in the structure of the clutch mechanism 200 shown in Fig.1, a first pressing member comprising a retainer 10 is used instead of the retainer 10a, bolts 104 longer than the bolts 104a are used instead of the bolts 104a, the release plate 103b fitted in the concave portion of the retainer 10a and the retaining ring 101 fastening the release plate are omitted and the bearing 103a is directly attached to the retainer 10. In this connection, the description will be given in which the same reference numbers are assigned to the same members as in the clutch mechanism 200.

The clutch mechanism 100, which is one used in a two-wheeled motor vehicle like the clutch mechanism 200, is a hydraulic clutch mechanism which plays a role to transfer a rotational driving force transferred from an engine crankshaft (not shown) as a constituent of an input system to an outputting member comprising an inner hub 120 that is a member of an output section and that is fixedly mounted on a transmission input shaft (not shown) as a constituent of an output system, and a role to discontinue the transfer.

In the first embodiment, the rotational driving force input system is an input system comprising an engine and a series of well-known mechanism parts which are operatively connected to the engine to transfer a rotational driving force of the engine to the clutch mechanism 100. The rotational driving force output system is an output system comprising a series of well-known mechanism parts which receive the driving force of the engine via the clutch mechanism 100 and output the driving force to power a driving wheel.

The clutch mechanism 100 comprises the retainer 10, coil springs 105 (elastic load applying means, i.e., constant load applying means), an inner hub 120, annular inputting members comprising friction plates 111, annular outputting members comprising clutch plates 112, a second pressing member comprising a pressure plate 130, a clutch outer case 114 and the like which are coaxially disposed relative to a rotational axis A-A of the clutch mechanism 100. A contact button 102 which is pressed by hydraulic pressure is attached to the retainer 10 via the bearing 103a, and the pressure plate 130 connected to the retainer 10 indirectly presses the friction plates 111 via the clutch plates 112 disposed facing the friction plates 111.

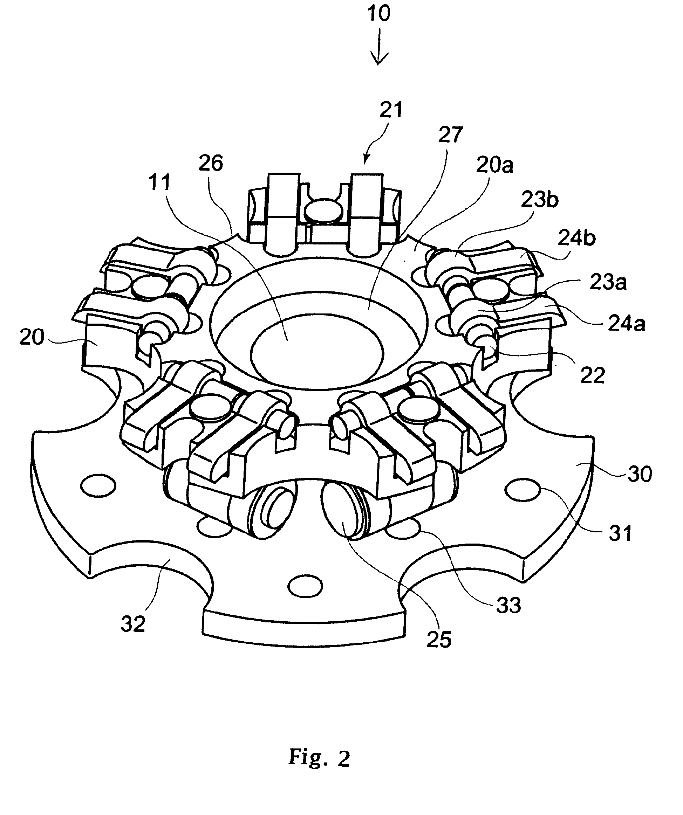

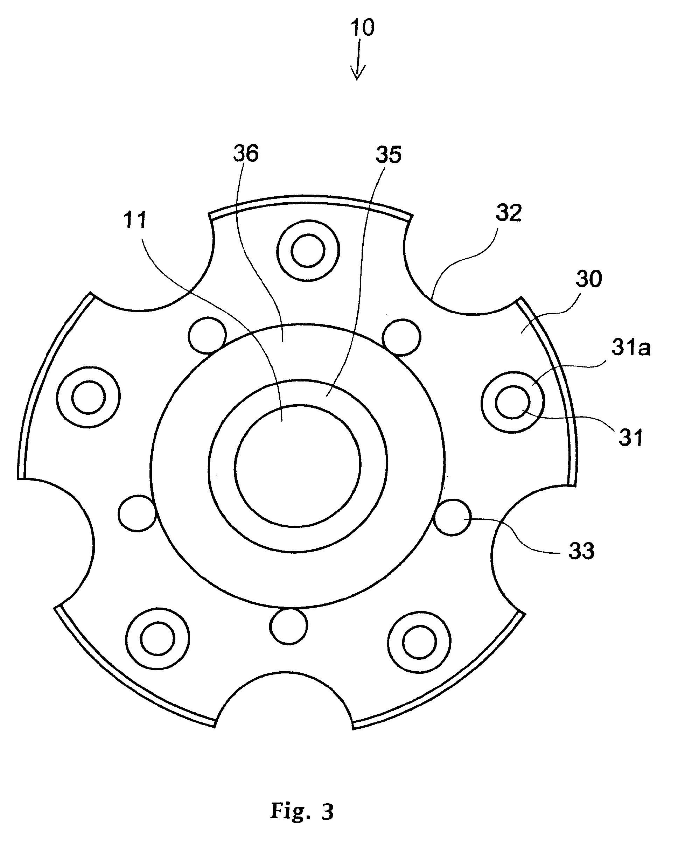

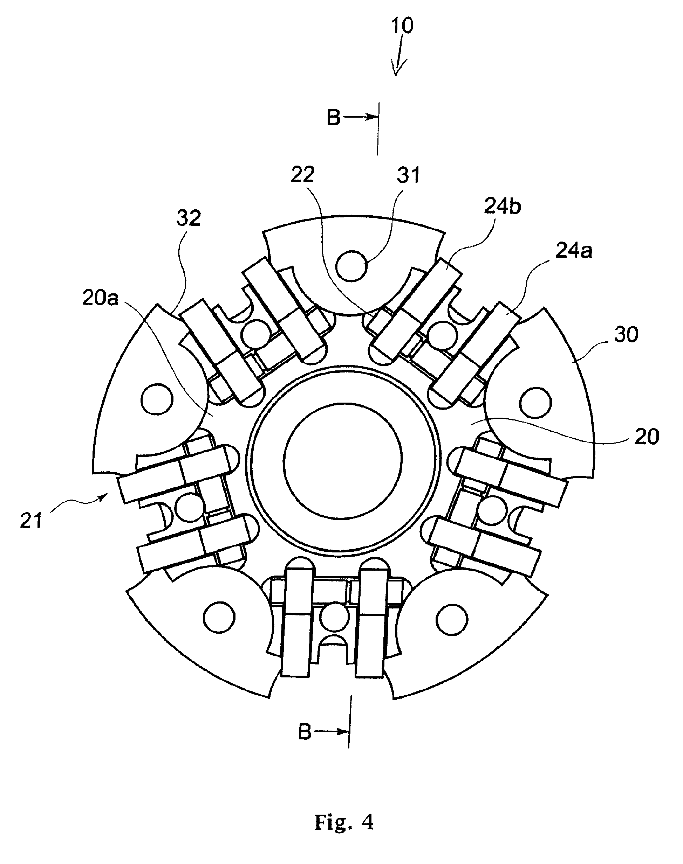

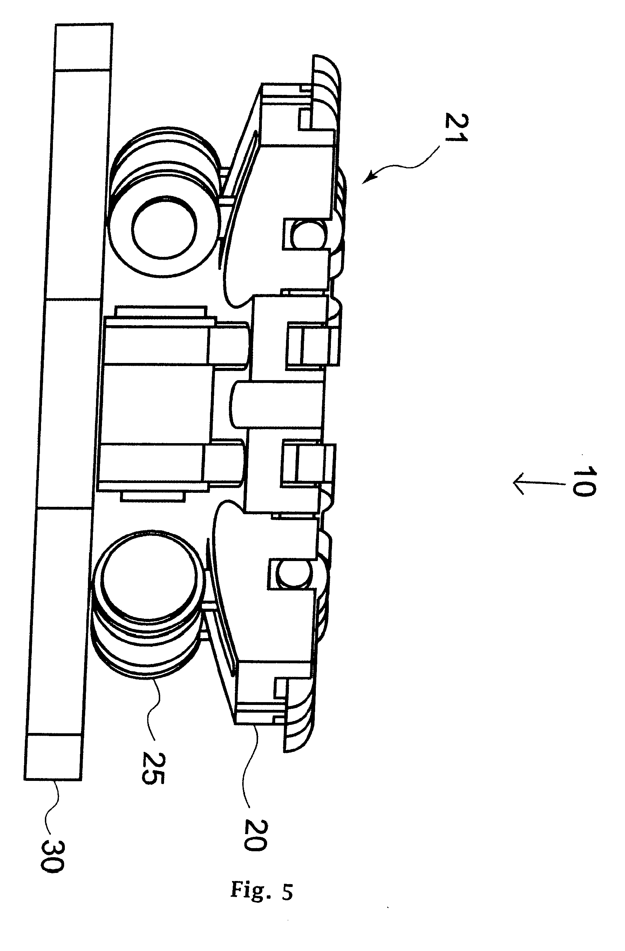

Referring now to Figs 2 to 6, the retainer 10 comprises a first annular portion 20 and a second annular portion 30 which are made of annular members (disk-like members), and a connecting portion 40. The retainer 10 is provided with a through hole 11 passing through the first annular portion 20, the second annular portion 30 and the connecting portion 40. The first annular portion 20, the second annular portion 30 and the connecting portion 40 may be, for example, made of iron, aluminum or the like and integrally formed. To accommodate mass bodies 25 between the first annular portion 20 and the second annular portion 30, the connecting portion 40 has a diameter smaller than those of the first annular portion 20 and the second annular portion 30.

The first annular portion 20 has a plurality of supports 22 disposed in a ring and centrifugal mechanisms 21 supported by the supports 22 as centrifugal load applying means (variable load applying means). As the supports 22, rivet-fixed roller pins may be used.

Each of the centrifugal mechanisms 21 comprises L-shaped arms 23a, 23b as swing members which are swingably supported by the support 22, a mass body 25 as a cylindrical weight fixedly attached to one ends of the L-shaped arms 23a, 23b, and operative portions 24a, 24b formed at the other ends of the respective L-shaped arms 23a, 23b. Accordingly, the L-shaped arms 23a, 23b are supported by the support 22 to be allowed to swing in a given swing range.

The operative portions 24a, 24b are formed at the ends of the respective L-shaped arms 23a, 23b and located on a side 20a of the first annular portion 20 which is opposite the second annular portion 30. The mass body 25 is fixedly attached to the ends of the L-shaped arms 23a, 23b and located on the other side of the first annular portion 20 which is nearer to the second annular portion 30. Each of the operative portion 24a, 24b has a smooth abutment surface. In short, in the first embodiment, each of the centrifugal mechanisms 21 has such a structure that one mass body 25 is fixedly attached to two L-shaped arms. The use of two L-shaped arms in one centrifugal mechanism 21 is because it is intended to provide such a configuration that a rib 123 is located between the two L-shaped arms. However, one L-shaped arm or three or more L-shaped arms may be used in conformity with a shape of the bottom of the inner hub 120

Notched portions 26 are arc-shaped notches formed between centrifugal mechanisms 21. A concave portion 27 is one formed around the through hole 11.

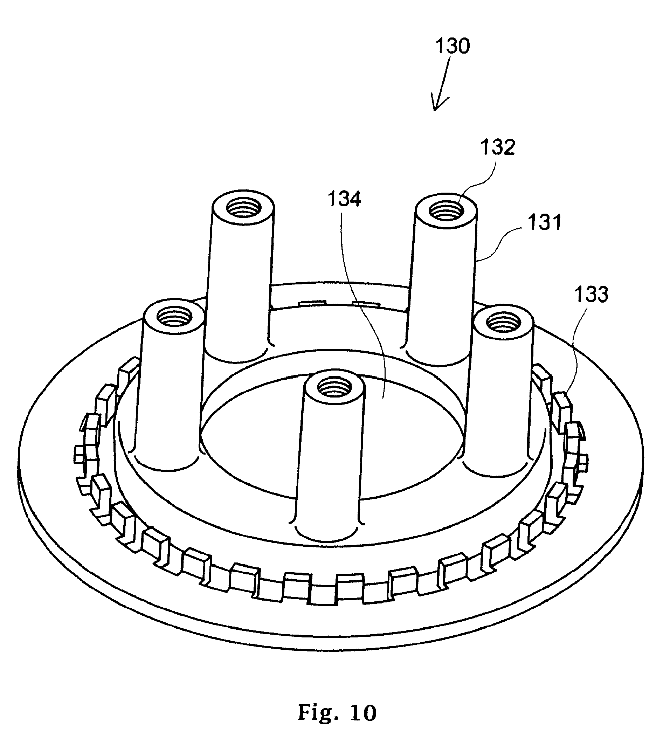

The second annular portion 30 has a plurality of connection holes (bolt insertion holes) 31 arranged in a ring, concave portions 31 a formed around the bolt insertion holes 31, arc-shaped notched portions 32, holes 33, a first concave portion 35 around the through hole 11, and a second concave portion 36 formed around the first concave portion 35. The bolt insertion holes 31 are located at positions corresponding to areas between the centrifugal mechanisms 21, i.e., areas at which the notches 26 are formed, and bolts 104 are inserted through the bolt insertion holes 31 and screwed in bolt receiving holes 132 formed in protrusions 131 of the pressure plate 130 shown in Fig.10. The bearing 103a is fitted in the first concave portion 35, and the contact button 102 is inserted in the bearing, and the contact button 102 is pressed in response to operation of a clutch lever.

As described above, in the retainer 10, the centrifugal mechanisms 21 of the first annular portion 20, and the notches 26 of the first annular portion 20 and the bolt insertion holes 31 of the second annular portion 30 are located alternately and circumferentially at regular intervals about the rotational axis A-A of the clutch mechanism 100. In this manner, the centrifugal mechanisms 21 are circumferentially placed at regular intervals. This enables the centrifugal mechanisms 21 to generate a pressing load substantially uniform in the direction of the rotational axis of the clutch mechanism 100.

In the first embodiment, the first annular portion 20 is provided with five sets of the support 22 and the centrifugal mechanism 21. However, the first annular portion 20 may be provided with a different number (other than five) of sets of the support 22 and the centrifugal mechanism 21, so long as the sets of the support and the centrifugal mechanism are circumferentially disposed at regular intervals. With respect to the shape of the retainer 10, the retainer may have a different shape, so long as the different shape permits the mass bodies 25 to be located between the first annular portion 20 and the second annular portion 30 and the centrifugal mechanisms 21 to be disposed circumferentially on the first annular portion 20.

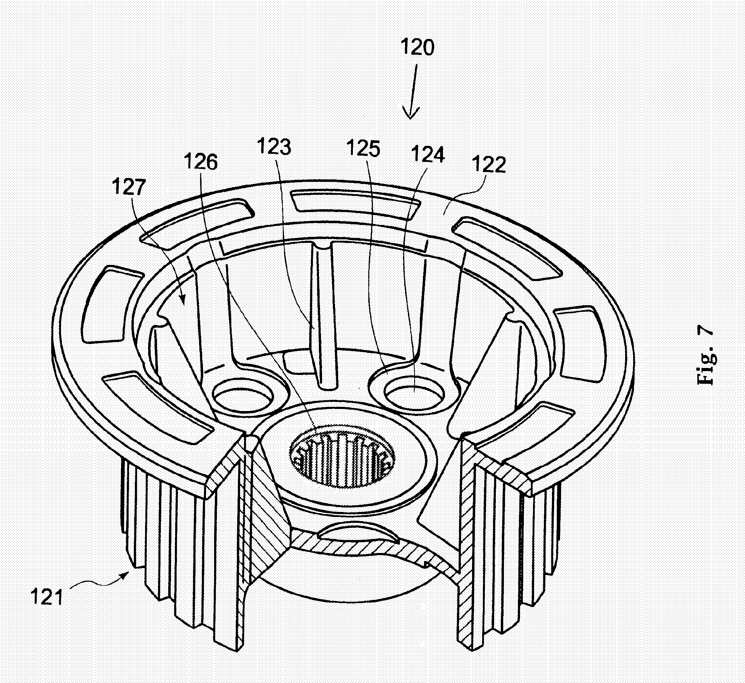

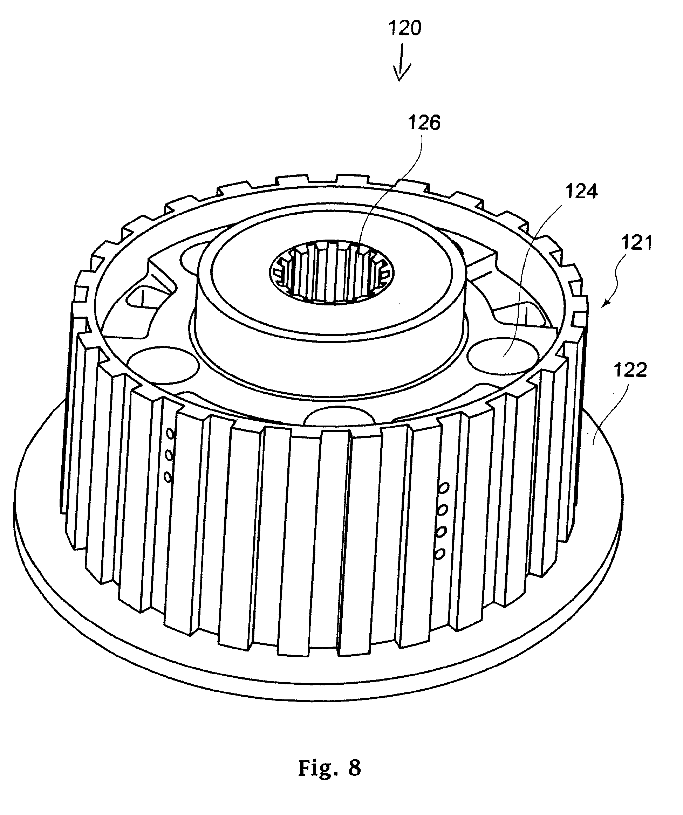

Referring now to Figs 7 to 9(a), the inner hub 120 is an annular member provided with an accommodation portion (concave portion) 127 for accommodating the retainer 10, and the inner hub has spline teeth 121, an annular rim (flange) 122, ribs 123, through holes 124, coil spring placing portions 125, and an input shaft holding portion 126.

The spline teeth 121 are so formed on an outer side surface of the inner hub 120 as to radially protrude outward. In an inner circumference of each of the clutch plates 112 placed between the friction plates 111, spline teeth are so formed as to mesh with spline grooves formed between the spline teeth 121.

In this manner, the spline teeth of each of the clutch plates 112 and the spline grooves of the inner hub 120 mesh with each other. Accordingly, the clutch plates 112 are relatively unrotatable and movable in the axial direction, relative to the inner hub 120.

The annular rim 122 is a flange formed along an outer circumference of the accommodation portion 127 of the inner hub 120. The rims 123 are formed on along a side surface and a bottom surface of the accommodation portion 127 in areas between the through holes 124.

The through holes 124 are formed at positions corresponding to those of the protrusions 131 as bolting portions formed in the pressure plate 130 in such a manner that each of the through holes is located at a vertex of a pentagon. The through holes 124 have an inner diameter lager than an outer diameter of the protrusions 131.

The coil spring placing portions 125 are concave portions which are formed around the through holes 124 and on which the coil springs 105 are placed.

The input shaft holding portion 126 is formed at the center (of the bottom) of the accommodation portion 127 and mounted on a transmission input shaft (mot shown).

The pressure plate 130 (see Fig 10) is provided with the protrusions (supports) 131 having the bolt receiving holes 132 as bolting portions for fixing the retainer 10, teeth 133 which are fitted in the spline grooves formed between the spline teeth 121, and an opening 134 having an inner diameter larger than an outer diameter of the transmission input shaft (not shown).

The retainer 10, the coil springs 105, the inner hub 120, the pressure plate 130, and so on are disposed in the following manner. Incidentally, with respect to some of other constituent members, description will be omitted.

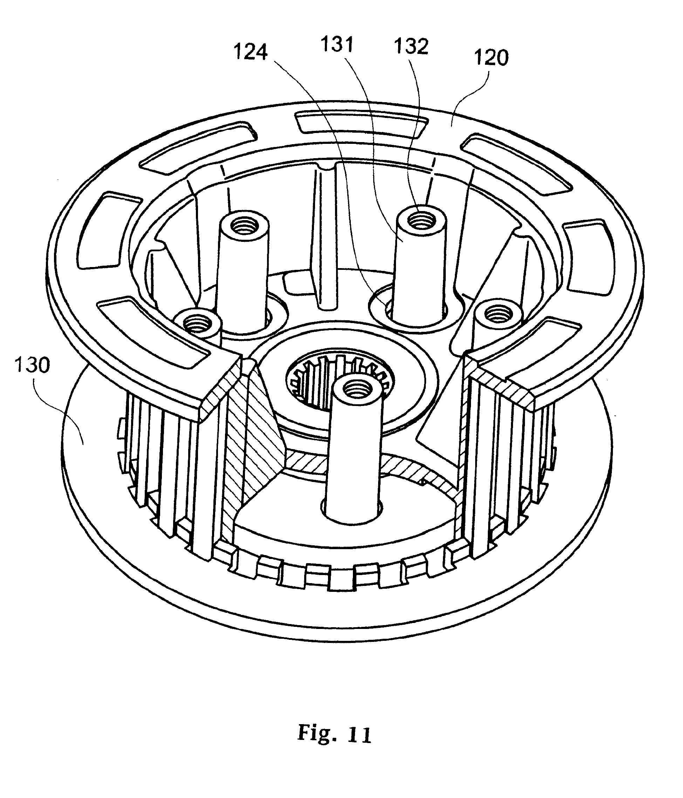

As shown in Fig.11, the protrusions 131 of the pressure plate 130 are inserted in the five through holes 124 of the inner hub 120, and the teeth 133 of the pressure plate 130 are fitted in the spline grooves formed between the spline teeth 121 of the inner hub 120.

On the coil spring placing portions, the coil springs 105 are placed surrounding the protrusions 131 of the pressure plate 130. On the protrusions 131, spacer 60 are placed. A the bolts 104 are inserted through the five bolt insertion holes 31 formed (arranged) in the second annular portion 30 of the retainer 10 and screwed into the bolt receiving holes 132 of the protrusions 131 to thereby fixedly attach the retainer 10 and the pressure plate 130 to each other via the spacers 60.

In consequence of this, the coil springs 105 are compressedly placed (compressed) between the inner hub 120 and the retainer 10. The coil springs 105 are thereby brought into elastically deformed state, and an elastic constant load is exerted on the pressure plate 130 by the coil springs 105, and the pressure plate 130 is biased toward the friction plates 111. Further, the operative portions 24a, 24b, which have smoothed abutment surfaces, of each pair of the L-shaped arms 23a, 23b are permitted to abut on the bottom of the inner hub 120.

Since the retainer 10 and the pressure plate 130 are fixedly connected this manner, the retainer 10 and the pressure plate 130 are relatively unrotatable and relatively movable in the axial direction.

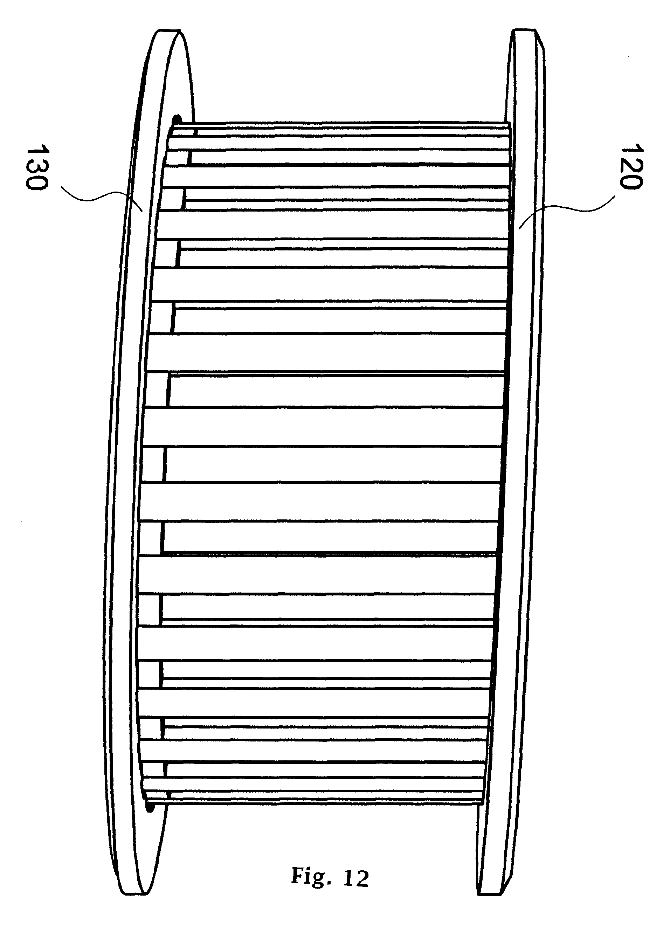

As shown in Figs.11 to 13, the plurality of spline teeth 121 formed in the inner hub 120 are fitted in grooves formed between the teeth 133 formed in the pressure plate 130. Accordingly, the retainer 10, the coil springs 105 and the inner hub 120 corotate with the pressure plate 130 and are relatively unrotatable relative to the pressure plate 130. The retainer 10 and the pressure plate 130 are combined with the inner hub 120 relatively unrotatably and relatively movably in the axial direction.

As shown in Fig.1, a plurality of spline grooves are provided in the interior of the clutch outer case 114, and a plurality of spline teeth are so formed on the outer circumference of each of the friction plates 111 as to mesh with the spline grooves. Since the spline teeth of the friction plates 111 are meshed with the spline grooves of the clutch outer case 114, the friction plates 111 are relatively unrotatable in the circumferential direction and movable in the axial direction relative to the clutch outer case 114. The clutch outer case 114 is connected to an engine clank shaft (not shown) via a gear.

As a material for the L-shaped arms 23a, 23b and the operative portions 24a, 24b of the centrifugal mechanisms 21 of the retainer 10, it is preferred that a highly rigid and lightweight material such as an aluminum alloy be used. On the other hand, a material for the mass bodies 25 is not particularly required to have a high rigidity and is, preferably, one having a high specific gravity such as a brass. By using such materials, the centrifugal mechanisms 21 are improved in centrifugal force-generation efficiency and enabled to generate a pressing load, which is attributable to centrifugal forces, highly precisely according to the engine speed.

It should be noted that the shapes and the manners of mounting of the L-shaped arms 23a, 23b and the operative portions 24a, 24b and the mass bodies 25 of the centrifugal mechanisms 21 are not restricted to those in this embodiment, so long as there is provided such a structure that the mass bodies 25 are subjected to centrifugal forces and the L-shaped arms 23a, 23b thereby swing.

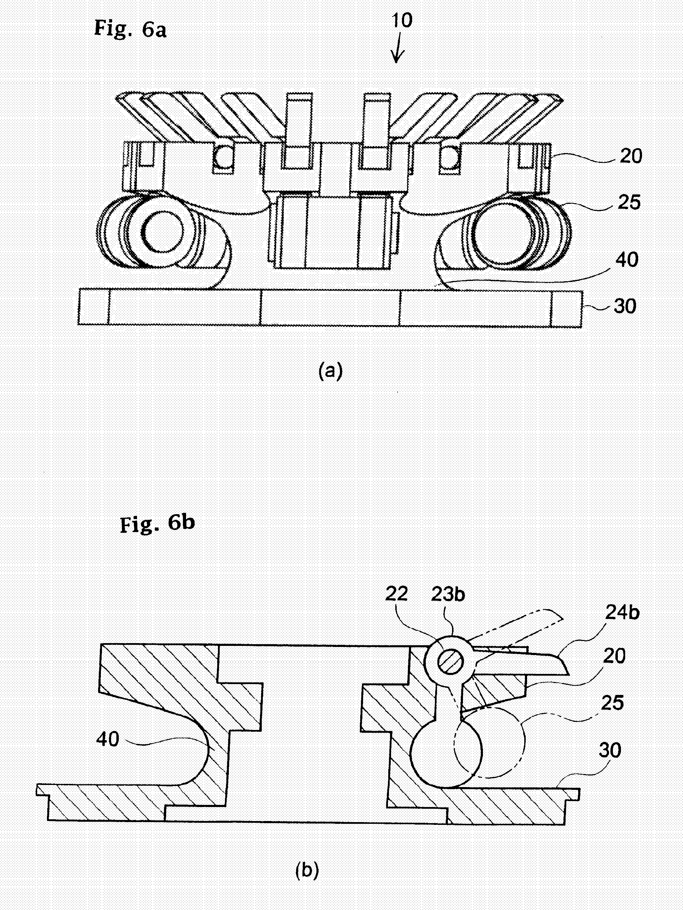

Then, operation of the clutch mechanism 100 will be described. Fig.6 shows the centrifugal mechanisms 21 of the retainer 10 in acting state in the clutch mechanism 100.

A torque from the crankshaft (not shown) of the engine is transferred to the clutch outer case 114 via a gear. The torque transferred to the clutch outer case 114 is transferred to the inner hub 120 through the friction plates 111 and the clutch plates 112 which are in press contact with each other, and the torque is further outputted to the transmission input shaft (not shown).

In the clutch mechanism 100, in a condition where the clutch lever is not grasped, the friction plates 111 and the clutch plates 112 placed between the pressure plate 130 connected to the retainer 10 and the inner hub 120 are in pressure contact with each other by the action of the coil springs 105 compressedly placed between the retainer 10 and the inner hub.

When a driver grasps the clutch lever, the contact button 102 is pressed by hydraulic pressure, and the contact button 102 presses the retainer 10 together with the bearing 1 03a. The retainer 10 is thereby moved toward the pressure plate 103 against elastic forces of the coil springs 105, and the pressure plate 130 connected to the retainer 10 is moved in the direction away from the friction plates 111. In consequence of this, the pressing force of the pressure plate 130 which has been exerted on the friction plates 111 is removed. Accordingly, the friction plates 111 and the clutch plates 112 are released from the pressure contact therebetween, and "disengagement of clutch" is thereby effected.

As described above, since the pressure plate 130 is biased by the elastic forces of the coil springs 105 toward the friction plates 111, it is necessary for effecting "disengagement of clutch" to move the pressure plate 130 in the direction away from the friction plates 111. In other words, in order to effect "disengagement of clutch", the driver is required to grasp the clutch lever with a force which overcomes the elastic load of the coil springs 105.

On the other hand, transfer of rotational driving force from the input system to the output system (,i.e., "engagement of clutch") is effected by releasing the clutch lever which the driver has grasped from the grasping. In other words, when the driver releases the clutch lever from the grasping, the pressing force applied to the contact button 102 by hydraulic pressure is reduced. The retainer 10 is thereby moved in the direction opposite to the direction toward the pressure plate 130, and the pressure plate 130 connected to the retainer 10 is moved toward the friction plates 111. In consequence thereof, the coil springs 105 which has undergone the compressive elastic deformation between the inner hub 120 and the retainer 10 biases the pressure plate 130 toward the friction plates 111 to thereby effect "engagement of clutch".

In this connection, if the points at which the coil springs 105 are pressed by the retainer 10 are present at locations nearer to the bottom of the inner hub 120, a load necessary for elastically deforming the coil springs 105 3 is larger, and thus, in order to effect "disengagement of clutch", the driver is required to hold the clutch lever with a larger force (in excess of the load).

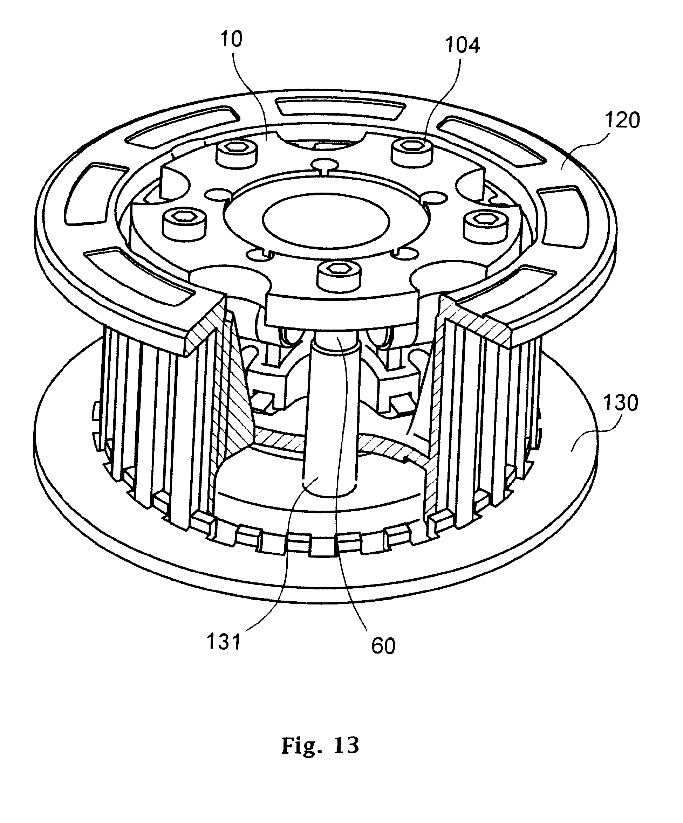

Therefore, in order to reduce the elastic load of the coil springs 105 with a view to reducing the force necessary for operating the clutch lever, it is effective to increase the distance between the retainer 10 and the bottom of the inner hub 120. Accordingly, in the first embodiment, using the bolts 104 longer than the bolts 104a, the retainer 10 and the pressure plate 130 are fixedly attached to each other with the spacers 60 interposed between the retainer 10 and the protrusions 131 of the pressure plate 130, as shown in Fig.13.

While the force necessary for operating the clutch lever is reduced when the spacers 60 are interposed, tightness of the pressure contact between the friction plates 111 and the clutch plates 112 is reduced. This is because the distance between the retainer 10 and the bottom of the inner hub 120 is increased, and accordingly, the forces (elastic load) of the coil springs 105 which bias the pressure plate 130 toward the friction plates 111 are reduced.

To cope therewith, as structures for compensating the decrement of the elastic load, the centrifugal mechanisms 21 mounted on the retainer 10 function. In a condition where the rotational driving force is transferred from the input system to the output system, i.e., in a "clutch is in engagement" condition, the retainer 10 is rotated together with the output system.

When the retainer 10 is rotated, a centrifugal force in the directions from the rotational axis toward the outside of the retainer 10 is exerted on each of the mass bodies 25 attached to the L-shaped arms 23a, 23b. By the centrifugal forces, the mass bodies 25 are moved in the directions away from the center of the retainer 10 and the L-shaped arms 23a, 23b pivot about the supports 22. By the pivotal movements, the operative portions 24a, 24b of the L-shaped arms 23a, 23b are urged to press the bottom of the inner hub 120.

Accordingly, when number of revolutions of the output system is increased, number of revolutions of the retainer 10 connected to the output system is also increased to increase the centrifugal forces which are exerted on the mass bodies 25. The forces of the operative portions 24a, 24b of the L-shaped arms 23a, 23b to bias the inner hub 120 are thereby increased.

In this manner, the increase in the centrifugal forces which are exerted on the mass bodies 25 and which increase as the number of revolutions of the output system increases is utilized to thereby compensate the decrease in the elastic load with the biasing load generated by the centrifugal forces, enabling the pressure contact between the friction plates 111 and the clutch plates 112 which is capable of preventing slide therebetween to be ensured.

As described above, the coil springs 105 constitute constant load-applying means (elastic load-applying means) which generate a pressing force to bring the friction plates 111 and the clutch plates 112 into pressure contact with each other, and the centrifugal mechanisms 21 constitute variable load-applying means (centrifugal load-applying means) which generate a variable force to bias the inner hub 120.

As described above, according to the clutch mechanism 100, the reduction of the elastic load by the coil springs 105 is realized by increasing the distance between the retainer 10 and the bottom of the inner hub 120. Accordingly, by the extremely simple structure, such a clutch mechanism is obtainable that a force required for operating a clutch lever is reduced. Further, since the reduction in the elastic load can be compensated with the centrifugal load, necessary tightness of the pressure contact between the friction plates 111 and clutch plates 112 can be ensured even in a condition where engine speed is high.

Further, in a case where a two-wheeled motor vehicle which employs the clutch mechanism 100 according to the present invention is driven, a force with which a driver grasps a clutch lever and which the driver keeps after "disengagement of clutch" in gear changing is not so considerable.

In the "clutch is in engagement" condition (condition where a driver does not grasp the clutch lever), centrifugal forces in the directions from the rotational axis toward the outside of the retainer 10 are exerted on the mass bodies 25 of the L-shaped arms 23a, 23b by rotation of the retainer 10, as shown in Fig.6, and thus the operative portions 24a, 24b are pressed against the pressure plate 120.

Next, in the "clutch is in disengagement" condition (condition where a driver grasps the clutch lever), the distance between the retainer 10 and the bottom of the inner hub 120 is short. Accordingly, the operative portions 24a, 24b are pressed by the inner hub 120. The mass bodies 25 thereby pivot about the supports 22 toward the rotational axis of the retainer 10. In this manner, since the mass bodies 25 are located nearer to the rotational axis of the retainer 10 in the "clutch is in disengagement" condition as compared with the "clutch is in engagement" condition shown in Fig.6, centrifugal forces exerted on the mass bodies 25 which are attributable to inertial rotation are smaller.

As described above, in the clutch mechanism 100, when the engine speed increases and exceeds a certain level in the "clutch is in engagement" condition, the centrifugal load increases and the force required for operating the clutch lever thereby becomes large. However, when the clutch lever is once grasped, the centrifugal load becomes low. Accordingly, the force for maintaining the grasping of the clutch mechanism after the clutch lever is grasped is not so considerable.

In a process where the two-wheeled motor vehicle stops, as the number of revolutions of the output system decreases, the number of revolutions of the retainer 10 decreases to reduce the centrifugal load. Further, in a condition where the two-wheeled motor vehicle has completely stopped, no centrifugal load is exerted and only the elastic load is exerted. Accordingly, a force to grasp the clutch lever and maintain the grasping of the clutch lever until the next start is markedly reduced as compared with conventional clutches.

As described above, in the clutch mechanism 100, since a total of the constant load and the variable load is in excess of a non-slide limit, slide can be prevented. This enables the constant load to be less than the maximum non-slide limit. By virtue thereof, burden of grasping a clutch lever can be relieved. In this connection, the non-slide limit is a value which is required for keeping the friction plates 111 and the clutch plates 112 in contact with each other to transfer the rotational driving force. The maximum non-slide limit is the non-slide limit at the time when the rotational driving force which is transferred from the input system to the output system is at its maximum. In the first embodiment, the maximum non-slide limit is set to be a lower limit of the pressing force between the friction plates 111 and the clutch plates 112, which is capable of preventing slip between the friction plates 111 and the clutch plates 112, at the time when the rotational driving force which is transferred from the input system to the output system is at its maximum.

Specifically, the constant load with which the pressure plate 130 presses the friction plates 111 is preferably 60% or more and 98% or less, more preferably 65% or more and 95% or less, and further preferably 70% or more and 90% or less of the maximum non-slide limit.

As described above, according to the clutch mechanism 100, a force required for operating a clutch lever is reduced, and tightness of pressure contact between friction plates and clutch plates which is capable of preventing slide between the friction plates and the clutch plates is ensured. Further, since the retainer 10 is so constructed that it comprises the first annular portion 20 and the second annular portion 30 and that the first annular portion 20 provided with the centrifugal mechanisms is accommodated in the inner hub 120, space-saving is realized. Moreover, with respect to other constituent members than the retainer 10, the bolts 104 and so on, constituent members of a conventional clutch mechanism can be used. This enables reduction of mounting-related costs to be realized.

In addition, since each of the centrifugal mechanisms 21 is so constructed to have two L-shaped arms, even if the retainer 10 is rotated at a high speed, stresses on portions which receive a centrifugal force can be reduced because the two portions receive the centrifugal force. Further, strengths of the centrifugal mechanisms 21 are thereby increased.

### Second Embodiment

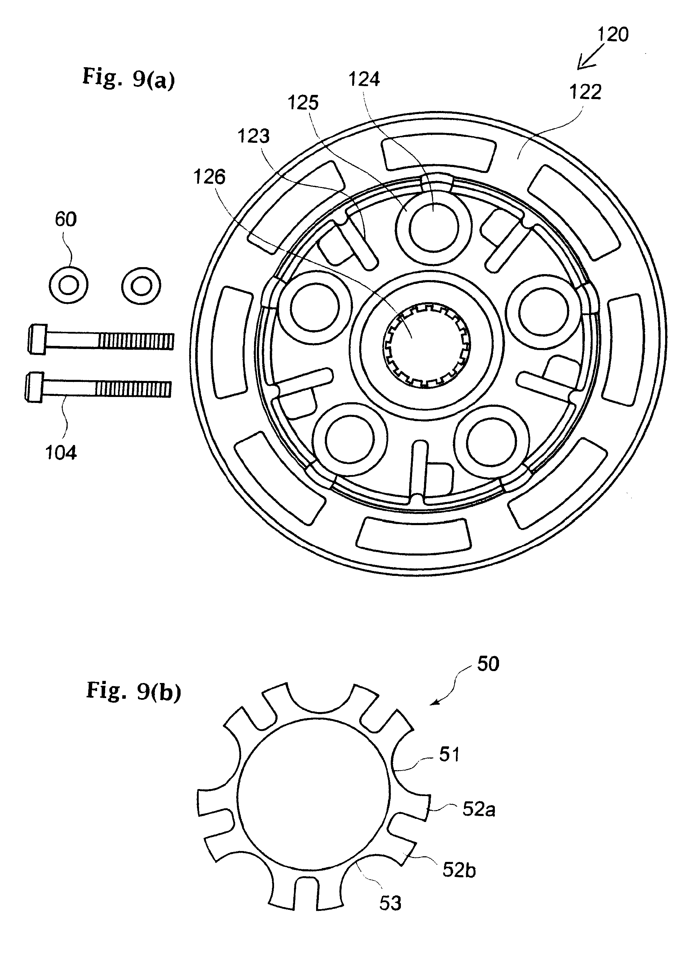

Fig.9(b) is a plan view of a base plate 50 employed in a second embodiment of the present invention.

The first embodiment has such a structure that the operative portions 24a, 24b of the L-shaped arms 23a, 23b of the retainer 10 are brought into direct contact with the bottom of the inner hub 120 to apply a load to the inner hub. On the other hand, the second embodiment has such a structure that the base plate 50 as a centrifugal load transfer member as shown in Fig.9(b) is placed between the operative portions 24a, 24b of the L-shaped arms 23a, 23b and the bottom of the inner hub 120. With respect to the other structural features, this embodiment is the same as the first embodiment.

The base plate 50 has an annular portion 51 and a plurality of plate portions 52a, 52b extending outward from the circumferential edge of the annular portion 51. The base plate 50 is made of, for example, a stainless steel, a steel or the like.

The plate portions 52a, 52b are so configured as to correspond to portions in the inner hub 120 on which (the operative portions 24a, 24b of) the L-shaped arms 23a, 23b abut, respectively, and the ribs 123 of the inner hub 120 are located between the plate portions 52a and the plate portions 52b. Between the pairs of plate portions 52a, 52b, notches 53 are provided which are conformed to the shape of the coil spring placing portions 125.

By providing the base plate 50, the operative portions 24a, 24b of the L-shaped arms 23a, 23b bias the inner hub 120 via the plate portions 52a, 52b, respectively. By virtue of this, areas in which the centrifugal load is exerted on the inner hub 120 are larger than those in the case where the inner hub 120 is biased only with the operative portions 24a, 24b of the L-shaped arms 23a, 23b.

Accordingly, the centrifugal load generated by swings of the L-shaped arms 23a, 23b is efficiently transferred to the inner hub 120.

### Third Embodiment

The third embodiment of the present invention has such a structure that a diaphragm spring is used as an elastic load-applying means. With respect to the other structural features, this embodiment is the same as the first and second embodiments.

In other words, the present invention is not restricted to cases where coil springs are used as elastic load-applying means and is applicable also to cases where other elastic load-applying means such as a diaphragm spring is used.

In the above embodiments, the hydraulic clutch mechanisms are described. It is, however, possible to apply each of the above-described embodiments to a clutch mechanism other than a hydraulic clutch mechanism, for example, a clutch mechanism using a release mechanism to operate the clutch.

Instead of the use of the spacers 60, a pressure plate having its protrusions preliminarily prolonged may be used, or coil springs having elastic forces may be used.

### Industrial Applicability

The present invention is applicable to clutch mechanisms of motor vehicles such as two-wheeled motor vehicles, four-wheeled motor vehicles or the like.

## Claims

1. A clutch mechanism (100) comprising annular inputting members (111) connected to a rotational driving force input system and annular outputting members (112) connected to a rotational driving force output system, said annular inputting members (111) and said annular outputting members (112) being alternately placed, and said annular inputting members (111) and said annular outputting members (112) being brought into pressure contact with each other to transfer a driving force from said rotational driving force input system to said rotational driving force output system, and said annular inputting members (111) and said annular outputting members (112) being released from the pressure contact to discontinue the transfer of the driving force; said clutch mechanism (100) further comprising:
a first pressing member (10) including a first annular portion (20) and a second annular portion (30) which are concentrically located with a connecting portion (40) therebetween, and being provided with a plurality of centrifugal load-applying means circumferentially disposed on said first annular portion, and connection holes (31) formed in areas of said second annular portion which correspond to areas between said centrifugal load-applying means in the first annular portion,
an outputting member (120) on an outer side surface of which said annular outputting members (112) are so mounted as to engage with the outer side surface movably in the direction of the rotational axis of said clutch mechanism (100), said outputting member (120) being provided with an accommodation portion (127) for accommodating said first pressing member (10) with said first annular portion (20) facing the bottom of the accommodation portion and said second annular portion (30) located near an opening of the accommodation portion, and through holes (124) formed in the bottom of the accommodation portion (127) at positions corresponding to those of the connection holes (31) of said second annular portion (30),
a second pressing member (130) provided with supporting portions (131) which are inserted through said holes (124) of said outputting member (120) and connected to said connection holes (31) to support said first pressing member (10), and
elastic load-applying means compressedly placed between said second annular portion (30) and the bottom of said outputting member (120);
said centrifugal load-applying means each including a plurality of supports arranged in a ring in said first annular portion(20), and swing members each having swingable L-shaped arms which extend through said first annular portion (20) and which are supported by said support and which are provided with a mass body at their one ends on the side nearer to said second annular portion (30) and operative portions at opposite ends thereof,
said outputting member (120) being provided with ribs in areas between said holes (124), and said swing members each having two L-shaped arms and one mass body, and said two L-shaped arms being disposed in such a manner that one of said rims is located therebetween,
said centrifugal load-applying means being means for generating a pressing load which presses the bottom of said outputting member (120) in response to rotation of said first pressing member (10),
said centrifugal load-applying means and said elastic load-applying means cooperatively generating a pressing force to bring said annular inputting members and said annular outputting members which are alternately placed into pressure contact.

2. A clutch mechanism (100) according to claim 1, wherein the rotational driving force input system comprises an engine crankshaft and wherein the rotational driving force output system comprises a transmission input shaft.

3. The clutch mechanism according to claim 1 or 2, wherein a centrifugal load transfer member (50) is interposed between said operative portions and said the bottom of said outputting member (120) to enable said operative portions to bias said outputting member (120) via said centrifugal load transfer member.

4. The clutch mechanism according to claim 3, wherein said centrifugal load transfer member is provided with an annular portion and a plurality of plate portions extending from the outer circumference of said annular portion, and said plate portions are placed at positions corresponding to those of said operative portions.

5. The clutch mechanism according to any one of claims 1 to 4, wherein said elastic load-applying means are coil springs, and said coil springs are disposed surrounding said supporting portions (131).

6. The clutch mechanism according to any one of claims 1 to 5, wherein said first pressing member (10) is placed in such a manner that a surface of said second annular portion (30) which is opposite said first annular portion (20) is located inside said opening of the accommodation portion of said outputting member (120).

7. The clutch mechanism according to any preceding claim, wherein said annular inputting members (111) and said annular outputting members (112) are disposed between said second pressing member (130) and said outputting member (120),

8. A motor vehicle using the clutch mechanism according to any preceding claim.
